# EUROPÄISCHE PATENTSCHRIFT

(11) **EP 1 047 880 B1**
(45) Veröffentlichungstag und Bekanntmachung des Hinweises auf die Patenterteilung: **26.03.2003**
(21) Anmeldenummer: 98965813.3
(22) Anmeldetag: 11.12.1998
(51) Int. Cl.: F04D 29/16, F04D 29/04, F16C 33/20

(54) **KREISELPUMPE**
CENTRIFUGAL PUMP
POMPE CENTRIFUGE

(30) Priorität: 12.01.1998 DE 19800617
(43) Veröffentlichungstag der Anmeldung: 02.11.2000
(73) Patentinhaber: KSB Aktiengesellschaft, 67227 Frankenthal (DE)
(72) Erfinder: PATIL, Shashikant, Chidanand, Pune 411 001 Maharashtra (IN); PARANJAPE, Nondan, Bhalchandra, Pune 411 052Maharashtra (IN); BHAT, Paramananda, Laxminarayan, Nasik 422 101 Maharashtra (IN)
(86) Internationale Anmeldenummer: EP9808094
(87) Internationale Veröffentlichungsnummer: WO99035405

(56) Entgegenhaltungen:
- EP-A- 0 039 435
- EP-A- 0 404 547
- US-A- 4 511 307
- US-A- 5 133 639

## Beschreibung

Die Erfindung betrifft eine Kreiselpumpe mit einem Gehäuse, in dem mindestens ein Laufrad angeordnet ist, wobei zwischen einem rotierenden Laufrad und stillstehenden Gehäuseteilen Spalte bestehen, deren die Spalte begrenzenden Wandflächen Bestandteil ringförmiger Ausbildungen für Dichtungs- und/oder Lagerzwecke sind, und die einen Spalt begrenzenden Wandflächen aus unterschiedlichen Materialien bestehen.

Die GB-A-2 150 221 zeigt bei mehrstufigen Kreiselpumpen eine Dichtung, bei der ein Kragen eines Laufrades, ein sogenannter Laufradhals, in den Innendurchmesser eines Dichtungsringes mit polygonaler Außenform eintaucht. Die polygonale Außenform verhindert eine Rotationsbewegung des Dichtungsringes gegenüber dem stillstehenden Gehäuse und läßt gleichzeitig in radialer Richtung eine gewisse Auslenkbewegung des Dichtungsringes zu. Der Dichtungsring besteht aus einem reibungsarmen Material, um die Reibungsverluste zwischen dem Laufradhals und dem Dichtungsring gering zu halten. Zur Erzielung einer hohen Dichtwirkung sollen der Außendurchmesser des Laufradhalses und der Innendurchmesser des Dichtungsringes gleich groß sein. Trotz der Verwendung von reibungsarmen Material führt eine solche Durchmesserwahl zu nicht vertretbaren Reibungsverlusten und der Verwendung überdimensionierter Antriebsmotoren.

Durch die EP-A-0 039 435 ist eine ähnliche Abdichtung bekannt, bei der ein schwimmend angeordneter Dichtungsring infolge seiner eckigen oder polygonalen Außenkontur gegen Verdrehung gesichert ist. Dieser im Querschnitt L-förmige Dichtungsring besteht aus einem Thermoplast mit geringem Reibungskoeffizient, welches unter dem Handelsnamen "Ryton" bekannt ist. Infolge des L-förmigen Querschnitts wird eine Ringfläche geschaffen, die unter dem Einfluß des Innendruckes eine dichtende Anpressung des Dichtungsringes an das Gehäuse bewirkt. Der Dichtspalt wird begrenzt durch ein L-förmiges metallisches Lager, welches am Laufradhals befestigt ist und mit diesem rotiert. Die Verwendung von einem metallischen Lager in Verbindung mit einem thermoplastischen, in radialer Richtung beweglichen Dichtungsring führt bei der Förderung von sandhaltigen Medien jedoch zu einem schnellen Verschleiß des Dichtungs- beziehungsweise Lagerspaltes.

Durch die US-A-4 063 846 ist es bekannt, bei der Förderung sandhaltiger Medien geschlitzte Anlaufscheiben vorzusehen, die bei einem Kreiselpumpenlaufrad den Axialschub aufnehmen sollen. Bei einer Axialverschiebung der Laufräder soll damit die Reibung zwischen den stillstehenden Gehäuseteilen und den daran anliegenden sowie rotierenden Laufrädern reduziert werden. Mit Hilfe der Ringteilung soll verhindert werden, daß sich die Anlaufringe bei der Förderung abrasiver Medien mitdrehen. Die Teilung des Ringes soll dessen Anpreßkraft an das Laufrad verbessern. Als Werkstoff findet ein laminierter Kunststoff Verwendung, dessen Eigenschaften beschrieben sind. Radiale Auslenkbewegungen der Laufräder bzw. der Pumpenwelle führen zu einer Beschädigung der am Laufradhals ausgebildeten axialen Dichtspalte.

In der US-A-4 511 307 wird zur Förderung sandhaltiger Medien vorgeschlagen, im Bereich einer am Laufradeintritt angeordneten Spaltringdichtung Lagermaterialien vorzusehen, deren Härte größer als die Härte von Sand ist. Damit soll gewährleistet werden, daß bei der Förderung von Sandbeimengungen im Bereich der Lager- oder Dichtungsspalte die zusammenwirkenden Flächen nicht beschädigt werden. Zu diesem Zweck findet Aluminiumoxid als Lagermaterial Verwendung, welches härter als das Silicium des Sandes ist. Solche Lager sind aber sehr aufwendig in der Herstellung sowie bruchgefährdet und können daher leicht bei den innerhalb einer Pumpe auftretenden Axial- oder Radialbewegungen zerstört werden.

Durch die US-A-5 133 639 ist eine Lageranordnung für mehrstufige Unterwassermotorpumpen bekannt, bei der im stillstehenden Gehäuseteil ein erster Lagerring befestigt ist, der aus einem Material besteht, dessen Härte die Härte von Sand übersteigt. Ein damit zusammenwirkender, am Laufrad befestigter zweiter Lagerring ist dagegen aus einem weicheren Material als Sand gefertigt. Er besteht aus natürlichem oder synthetischem Gummi oder anderem gummiähnlichem Material. Weiterhin kann dieser gummiähnliche Dichtring mit einer Beschichtung versehen sein, die die Wasserschmierung verbessert. Ein solcher mehrlagig aufgebauter Dichtring besteht aus verstärktem Leinen, BUNA und einem dünnen Überzug aus verstärktem Phenol. Die planen Anlageflächen dieser Lagerringe sollen sicherstellen, daß sich innerhalb des Lagerspaltes keine Sammelstellen für zerriebene Sandpartikel bilden können, die auf Dauer eine zerstörerische Wirkung auf die Lagerflächen ausüben würden.

Der Erfindung liegt das Problem zugrunde, für durchströmte Spalte bei Kreiselpumpen eine Dichtung und Lagerung zu entwickeln, die bei hoher Dichtwirkung gleichzeitig auch eine große Beständigkeit bei der Förderung sandhaltiger Medien aufweist. Die Lösung dieses Problems sieht vor, daß für dichtende und/oder lagernde Spalte zwischen rotierenden Pumpenteilen und stillstehenden Gehäuseteilen die eine Wandfläche aus einem Polyethylen hoher bis höchster Dichte (HDPE) und die andere Wandfläche aus einem elastischen Polyurethan (PU, PUR) besteht. Die Kombination dieser beiden Werkstoffe, die als sogenannte weiche Werkstoffe anzusehen sind, ergibt eine außergewöhnlich hohe Beständigkeit gegenüber einem mit Sand belasteten Fördermedium. Das HDPE-Material hat einen sehr niedrigen Reibungsbeiwert, und gleichzeitig sehr geringe Fließeigenschaften. Dies erlaubt es, daß die Spalte zwischen stillstehenden und rotierenden Teil äußerst klein gehalten werden können. Die Gefahr eines Anlaufens oder Klemmens der Spalte während des Betriebes kann somit minimiert werden.

Als vorteilhaft hat sich weiterhin herausgestellt, wenn ein die rotierende Wandfläche des Spaltes bildende Bauteil aus Polyethylen hoher bis höchster Dichte HDPE besteht und ein die stillstehende Wandfläche des Spaltes bildende Bauteil aus elastischen Polyurethan besteht. Infolge des aus elastischem Polyurethan gebildeten Bauteil wird auch bei axialen Verschiebungen eines oder mehrerer Laufräder eine dichtende Anlage am Dichtungsspalt gewährleistet. Damit kann vom örtlich unveränderbaren und feststehenden Gehäuseteil das elastische Polyurethan-Bauteil abgestützt werden. Hierzu sehen weitere Ausgestaltungen vor, daß ein an einem Laufrad befestigter Laufring aus Polyethylen hoher bis höchster Dichte HDPE besteht und daß eine mit einem Laufrad oder einer Welle rotierende Stufenhülse aus Polyethylen hoher bis höchster Dichte HDPE besteht.

Aus dem elastischen Polyurethan sind im Gehäuse verdrehgesichert angeordnete Dichtungs- und/oder Lagerringe sowie zwischen Laufrad und Welle angeordnete Stufenbuchse zur Durchführung der Welle bzw. einer Laufradnabe hergestellt. Zum Ausgleich eventueller Auslenkbewegungen des rotierenden Teiles der Pumpe können Dichtungsring, Lagerring und/oder Stufenbuchse im Gehäuse radial verschieblich oder nachgiebig angeordnet sein. Infolge ihrer Ausbildung aus elastischem Polyurethan wird gleichzeitig gewährleistet, daß eine dichtende Anpressung der Teile an das Gehäuse stattfindet, die bei normalen Betriebszuständen durch einen Druckunterschied im Bereich der Spalte unterstützt wird. Befindet sich also eine Stufenbüchse im Übergang zwischen zwei hintereinander geschalteten Pumpenstufen, dann wird der höhere Druck in der jeweiligen Pumpenstufe für eine dichtende Anpressung der Stufenbuchse sorgen. In gleicher Weise funktioniert dies bei einem Dichtungs- und/oder Lagerring.

Nach einer weiteren Ausgestaltung der Erfindung ist der Dichtungsring konisch ausgebildet. Ein solcher Dichtungsring, der gewöhnlich auf der Saugseite eines Laufrad angeordnet ist, wirkt mit seinem Innendurchmesser mit einem darin eingetauchten Kragen des Laufrades dichtend zusammen. Ein solcher Kragen wird häufig auch als Saugmund eines Laufrades bezeichnet. Infolge der konischen Form eines solchen Dichtungsringes, welcher vergleichbar mit einer Tellerfeder ist, wird auch bei Axialbewegungen des Laufrades eine dichtende Anlage am Laufrad gewährleistet. Desweiteren ergibt sich somit am radialen Dichtungsspalt nur eine schmale Anlagefläche zwischen rotierenden und stillstehenden Dichtungselementen. Gleichzeitig ergibt sich durch die konische Form und unter der Einwirkung eines Axialschubes eine verstärkte Anpreßwirkung, mit deren Hilfe die Dichtungswirkung unterstützt wird. Eine elastische Formänderung des stillstehenden, konischen Dichtungsringes hat im Bereich des in axialer Richtung durchströmten Dichtungsspaltes gleichzeitig eine Spaltverringerung zur Folge. Diese Spaltverringerung, die eine Verkleinerung des Innendurchmessers darstellt, verbessert die Abdichtung im axial durchströmten Spalt. Die Eigenschaften der Materialpaarung lassen ohne Risiko ein sehr kleines Spiel zwischen den zusammenwirkenden Teilen zu.

Die Elastizität des konisch ausgebildeten Dichtungsringes ist dadurch beeinflußbar, daß dessen Wandstärke zwischen einer Anlagestelle am stillstehenden Gehäuseteil und einer Anlagestelle am rotierenden Pumpenteil unterschiedlich ausgebildet ist. Somit kann entsprechend dem Verlauf der Wandstärke die Elastizität beeinflußt werden, beispielsweise, wenn die Wandstärke in Richtung Innendurchmesser oder Spalt abnimmt. Durch eine winkelförmige Ausbildung des Laufringes, der am Laufrad befestigt ist, kann ein radial und axial durchströmter Dichtungsspalt realisiert werden. Um bei Verwendung sehr geringer Toleranzen sicherzustellen, daß eine Berührung der den Spalt begrenzenden Wandflächen keine negativen Auswirkungen zeigen, zwischen einem saugseitig vorstehenden Kragen des Laufrades und einem auf dem Kragen angeordneten Laufring ein Freiraum angeordnet ist, wobei der Freiraum mindestens in der Ebene des axialen Dichtungsspaltes liegt. Mittels dieser Lösung wird gewährleistet, daß bei sehr großen radialen Bewegungen des Laufrades bei einer Berührung zwischen Spaltring und Dichtungsring der Spaltring zum Laufrad hin nachgiebig angeordnet ist.

Ein Ausführungsbeispiel der Erfindung ist in den Zeichnungen dargestellt und wird im folgenden näher beschrieben. Es zeigen die
- Fig. 1: eine mehrstufige Kreiselpumpe im Schnitt, und die
- Fig. 2: eine vergrößerte Darstellung von den Stufengehäusen.

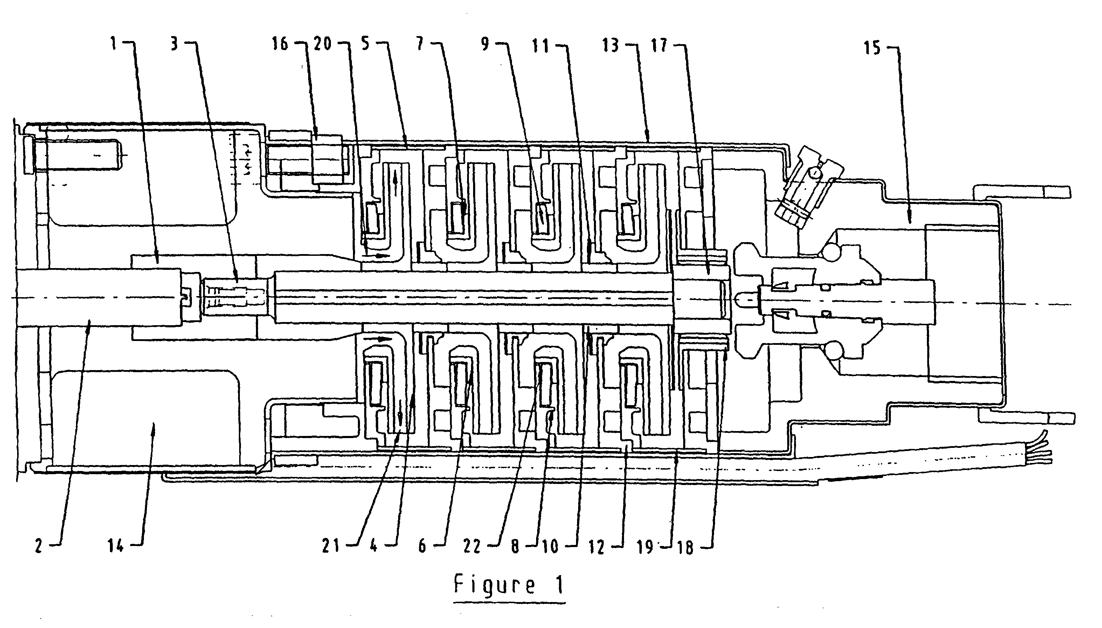

In Fig. 1 ist als Kreiselpumpe beispielhaft eine mehrstufige Unterwassermotorpumpe gezeigt. Der Gegenstand der Erfindung ist aber hierauf nicht beschränkt. Mit Hilfe einer Kupplung 1 wird von einer Motorwelle 2 eine Drehbewegung auf eine Welle 3 mit darauf befestigten Laufrädern 4 übertragen. Diese rotieren innerhalb eines Gehäuses 5, welches hier als Stufengehäuse ausgebildet ist und von dem mehrere vorhanden sind. Auf den Laufrädern 4 sind auf der Saugseite auf einem Kragen 7, auch als sogenannter Laufradhals 7 bekannt, der den Eintrittsbereich eines Laufrades 4 definiert, winkelförmige Laufringe 6 befestigt. Der Laufradhals ist bei diesem Beispiel Bestandteil der saugseitigen Deckscheibe 7 des Laufrades 4.

Mittels eines am Gehäuse 5 befestigten Absatzes 8 ist ein Dichtungs- und Lagerfunktion aufweisender Spaltring 9 drehgesichert innerhalb des Gehäuses 5 gehalten. Der Außendurchmesser des Spaltringes 9 ist kleiner ausgeführt als der Innendurchmesser des Vorsprunges 8. Diese an sich bekannte Maßnahme gewährleistet, daß während des Betriebes stattfindende Auslenkbewegungen des rotierenden Pumpenteiles, der in diesem Ausführungsbeispiel insgesamt vier Laufräder aufweist, ohne Beschädigung des Dichtungsspaltes zwischen Laufring 6 und Spaltring 9 stattfinden können. Die Durchmesserunterschiede ermöglichen eine Radialverschiebung von Laufrad 4 und Spaltring 9.

Ein weiterer Dichtungs- oder Lagerspalt besteht im Übergang zwischen je zwei aufeinander folgenden Stufen. Zwischen dem Gehäuse 5 und der rotierenden Welle 3 sind dazu auf der Welle 3 Stufenhülsen 10 angeordnet, die mit Wellendrehzahl rotieren. Die hier als Einzelteil dargestellten Stufenhülsen 10 können genausogut integraler Bestandteil des Laufrades 4 sein oder am Laufrad direkt befestigt sein, beispielsweise auf einer Nabe. Dies ist abhängig von der konstruktiven Ausbildung einer Pumpenstufe und den innerhalb der Stufe vorherrschenden Druckverhältnissen. Gehäuseseitig wird der Spalt begrenzt durch eine Stufenbuchse 11, welche hier zwar als separates Bauteil gezeigt ist, aber genausogut als integraler Bestandteil des Gehäuses 5 ausgebildet sein kann. Die Stufenbuchse 11 ist bei dem hier gewählten Ausführungsbeispiel verdrehgesichert an einer Wandfläche 12 des Gehäuses 5 befestigt. Das Gehäuse 5 wird in diesem Beispiel von mehreren Teilen gebildet, es ist aber auch als einteiliges Formteil herstellbar. Die gewählte Verdrehsicherung ermöglicht ebenfalls wie die Lagesicherung des Spaltringes 9 eine Auslenkbewegung radial zur Drehachse.

Die Gehäuse 5 sind in diesem Ausführungsbeispiel zusätzlich in einem äußeren rohrförmigen Gehäuse 13 gehalten. Dies verbindet gleichzeitig ein Einlaufgehäuse 14 und einen Druckstutzen 15 mit darin angeordneten Rückschlagventil zu einer baulichen Einheit mit Hilfe von Schraubelementen 16. Je nach konstruktiver Gestaltung der Stufengehäuse 5 können anstelle eines äußeren Gehäuses 13 auch Zuganker oder sonstige Halteelemente zum Zusammenhalt der Kreiselpumpe Verwendung finden. Zur Verbesserung der Betriebssicherheit ist die Pumpenwelle 3 am motorfernen Ende im letzten Gehäuse 19 in einer Lagerung 17, 18 gehalten.

Ein durch das Einlaufgehäuse 14 angesaugtes sandhaltiges Fördermedium tritt gemäß der Pfeile im Bereich des Saugmundes 20 in das erste Laufrad 4 ein und verläßt dieses im Bereich des Laufradaustrittes 21. Die zwischen dem rotierenden Laufrad 4 und den stillstehenden Gehäuse 5 existierenden schmalen Spalte 22, 23 sind für den Wirkungsgrad einer Kreiselpumpe von erheblicher Bedeutung. Diese Spalte müssen so klein wie möglich ausgebildet werden, um ein Zurückströmen von bereits gefördertem Medium, beispielsweise durch den Spalt 22 in den Saugmundbereich 20 jeden Laufrades, zu verhindern. Gleichzeitig unterliegen solche Spalte 22, 23 auch einem erheblichen Verschleiß, wenn im Fördermedium Sand enthalten ist.

Dies ist häufig der Fall beim Einsatz solcher Pumpen als Förderpumpen in Brunnenanlagen.

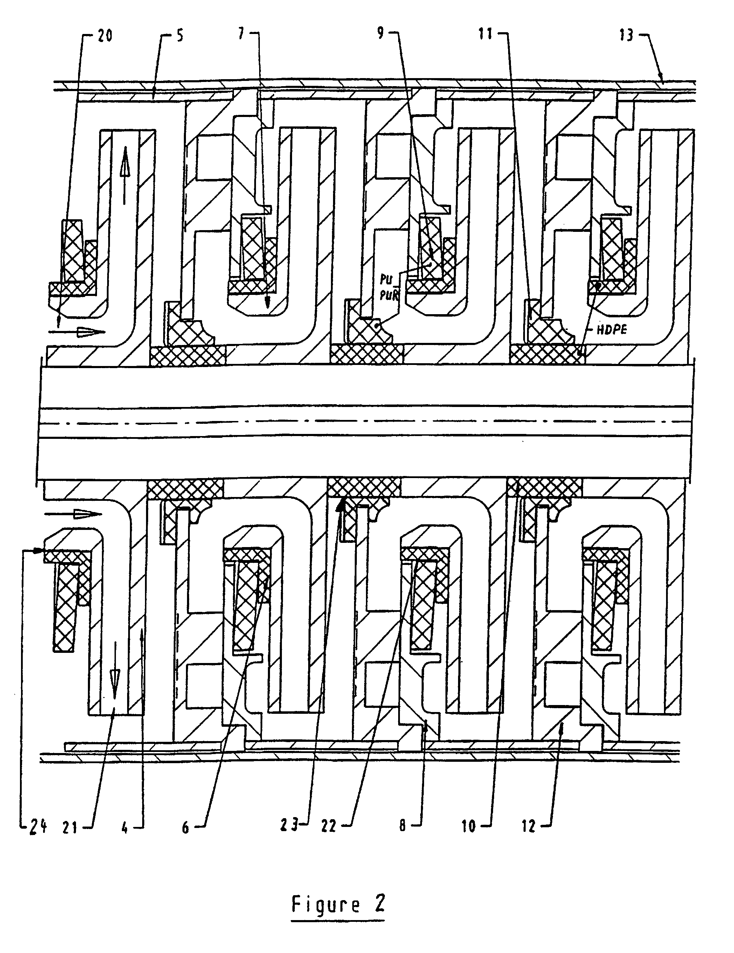

Die Fig. 2 zeigt in vergrößerter Darstellung einen Ausschnitt aus Fig. 1. Mit einem Laufrad 4 rotiert ein Laufring 6, der am Kragen oder Saugmund 7 des Laufrades befestigt ist. Der auf der Saugseite des Laufrades 4 befindliche Saugmund 7 ist umgeben von einem Dichtungs- und Lagerfunktion ausübenden Spaltring 9. Der Spaltring weist eine konische Form auf, so daß seine stirnseitigen Kreisringflächen unter einem Winkel zu den senkrecht auf der Pumpenwelle stehenden Gehäusewand verlaufen. Der aus einem elastischen Polyurethan (PU, PUR) hergestellte Spaltring 9 zeigt damit eine Wirkung analog einer Tellerfeder. Somit ist gewährleistet, daß bei einer Axialverschiebung der Laufräder 4, die beispielsweise durch den innerhalb der Kreiselpumpe vorherrschenden Axialschub möglich ist, eine dichtende Anlage zwischen dem Laufring 6 und dem Spaltring 9 bestehen bleibt. Desweiteren ergibt sich somit im normalen Betrieb an der radial verlaufenden Fläche des Dichtspaltes nur schmale Berührungszonen. Beim Auftreten von Axialschüben kann dieser Ring durch Formänderung und Abstützung am Gehäuse Kräfte aufnehmen.

Der in axialer Richtung verlaufende Teil des Dichtspaltes 22 kann sehr klein gehalten werden. Aus den Abbildungen ist erkennbar, daß bei einer radialen Auslenkbewegung der Laufräder, die größer als das durch die gewählten Abmessungen bedingte Radialspiel sein kann, der Spaltring 9 einer solchen Auslenkbewegung folgen kann, da sein Außendurchmesser kleiner als der Innendurchmesser des Absatzes 8 ist, welcher gleichzeitig als Verdrehsicherung für den Spaltring 9 dient.

Ebenfalls aus elastischem Polyurethan (PU, PUR) ist die Stufenbuchse 11 hergestellt, die zusammen mit der auf der Welle 3 befestigten Stufenhülse 10 einen axial durchströmten Dichtungs- und/oder Lagerspalt 23 bildet. Die Verwendung von Polyethylen hoher und höchster Dichte für die eine Wandfläche der Dichtungsspalte 22, 23 und der Einsatz von Polyurethan für die andere angrenzende oder gegenüberliegende Wandfläche ergeben eine bisher nicht erreichte Beständigkeit gegenüber sandhaltigen Fördermedien bei gleichzeitig höchster Dichtheit und sehr günstigem Gleitverhalten. Die aus Polyurethan bestehenden Bauteile können in Form von Spritzgießen, Heißgießen oder anderer aus thermoplastischen Polyurethan (TPU) bestehenden Verfahren hergestellt werden. Wesentlich ist, daß das aus Polyurethan bestehende Bauteil ein elastisches oder gummielastisches Verhalten am Tag legt, welches eine hohe Langzeitwirkung zeigt. Für die Polyurethan-Bauteile liegt die Shore_{A}-Härte im Bereich von 75 bis 93.

Die aus einem Polyethylen hoher und höchster Dichte bestehenden Bauteile sind unter den verschiedensten Handelsnamen bekannt und lassen sich als Spritzteile, Gußteile oder aus Platten, Stangen oder anderen bekannten Halbzeugformen in üblicher Weise, z. B. spanabhebend herstellen. Die Erfindung ist nicht auf die hier gezeigte Darstellung beschränkt, derzufolge die rotierenden Bauteile aus einem Polyethylen hoher und höchster Dichte bestehen und die am Gehäuse stillstehend befestigten Teile aus einem elastischen Polyurethan bestehen. Genausogut ist auch eine umgekehrte Anordnung der Materialpaarungen möglich.

Im Bereich des Saugmundes 7 kann zwischen dem Laufring 6 und dem Saugmund 7 ein zusätzlicher Spalt 24 angeordnet sein, mit dessen Hilfe bei einem zu engen axialen Dichtungsspalt 22 eine Nachgiebigkeit für den Laufring 6 im Bereich dieses axialen Dichtungsspaltes möglich ist.

Der Spaltring 9 ist mit seiner Außenkontur, innerhalb des entsprechend gestalteten Absatzes 8 des Gehäuses 5 befindlich. Die Außen- und Innenabmessungen sind dabei so gewählt, daß eine Radialverschiebung des Spaltringes 9 gegenüber dem Absatz 8 und damit gegenüber dem Gehäuse 5 möglich ist. Verdrehsicherungen für den Lager- und Dichtungsfunktionen aufweisenden Spaltring 9 sind in bekannter Weise anbringbar.

## Patentansprüche

1. Kreiselpumpe mit einem Gehäuse (5, 13, 19), in dem mindestens ein Laufrad (4) angeordnet ist, wobei zwischen einem rotierenden Laufrad (4) und stillstehenden Gehäuseteilen Spalte (22, 23) bestehen, deren die Spalte (22, 23) begrenzenden Wandflächen Bestandteil ringförmiger Ausbildungen (6, 9, 10, 11) für Dichtungs- und/oder Lagerzwecke sind, und die einen Spalt (22, 23) begrenzenden Wandflächen aus unterschiedlichen Materialien bestehen, **dadurch gekennzeichnet, daß** für dichtende und/oder lagernde Spalte (22, 23) zwischen rotierenden Pumpenteilen (3, 5) und stillstehenden Gehäuseteilen (5, 9, 11, 19) die eine Wandfläche aus einem Polyethylen hoher bis höchster Dichte (HDPE) und die andere Wandfläche aus einem elastischen Polyurethan (PU, PUR) besteht.

2. Kreiselpumpe nach Anspruch 1, **dadurch gekennzeichnet, daß** ein die rotierende Wandfläche des Spaltes (22, 23) bildende Bauteil aus Polyethylen hoher bis höchster Dichte (HDPE) besteht und ein die stillstehende Wandfläche des Spaltes (22, 23) bildende Bauteil aus elastischen Polyurethan (PU) besteht.

3. Kreiselpumpe nach Anspruch 1 oder 2, **dadurch gekennzeichnet, daß** ein an einem Laufrad (4) befestigter Laufring (6) aus Polyethylen hoher bis höchster Dichte (HDPE) besteht.

4. Kreiselpumpe nach einem der Ansprüche 1, 2 oder 3, **dadurch gekennzeichnet, daß** eine mit einem Laufrad (4) oder einer Welle (3) rotierende Stufenhülse (10) aus Polyethylen hoher bis höchster Dichte (HDPE) besteht.

5. Kreiselpumpe nach einem der Ansprüche 1 bis 4, **dadurch gekennzeichnet, daß** ein im Gehäuse verdrehgesichert angeordneter Dichtungs- und/oder Lagerring (9, 11) aus elastischen Polyurethan (PU, PUR) besteht.

6. Kreiselpumpe nach einem der Ansprüche 1 bis 5, **dadurch gekennzeichnet, daß** eine zwischen Laufrad (4) oder Welle (3) angeordnete, am Gehäuse verdrehgesichert angeordnete Stufenbuchse (11) aus elastischem Polyurethan (PU, PUR) besteht.

7. Kreiselpumpe nach einem der Ansprüche 1 bis 6, **dadurch gekennzeichnet, daß** Dichtungsring, Lagerring und/oder Stufenbuchse (9, 11) im Gehäuse (5, 19) radial verschieblich angeordnet sind.

8. Kreiselpumpe nach Anspruch 7, **dadurch gekennzeichnet, daß** Dichtungsring, Lagerring und/oder Stufenbuchse (9, 11) am Gehäuse (5, 19) dichtend anliegen.

9. Kreiselpumpe nach einem der Ansprüche 1 bis 8, **dadurch gekennzeichnet, daß** der Dichtungsring und/oder Lagerring (9) konisch ausgebildet ist.

10. Kreiselpumpe nach Anspruch 9, **dadurch gekennzeichnet, daß** die Wandstärke des Dichtungs- und/oder Lagerringes (9) zwischen einer Anlagestelle am stillstehenden Gehäuseteil und einer Anlagestelle am rotierenden Pumpenteil unterschiedlich ausgebildet ist.

11. Kreiselpumpe nach Anspruch 3, **dadurch gekennzeichnet, daß** der Laufring (6) einen winkelförmigen Querschnitt aufweist.

12. Kreiselpumpe nach einem der Ansprüche 1 bis 11, **dadurch gekennzeichnet, daß** zwischen einem saugseitig vorstehenden Kragen (7) des Laufrades (4) und einem auf dem Kragen (7) angeordneten Laufring (6) ein Freiraum angeordnet ist, wobei der Freiraum mindestens in der Ebene des axialen Dichtungsspaltes (22) liegt.

## Claims

1. Centrifugal pump with a casing (5, 13, 19), in which at least one impeller (4) is arranged, with gaps (22, 23) existing between a rotating impeller (4) and stationary casing parts, the wall surfaces of which that bound the gaps (22, 23) being a component part of annular formations (6, 9, 10, 11) for sealing and/or bearing purposes, and which wall surfaces that bound a gap (22, 23) consisting of different materials, **characterized in that**, for sealing and/or bearing gaps (22, 23) between rotating pump parts (3, 5) and stationary casing parts (5, 9, 11, 19), the one wall surface consists of a high to very high density polyethylene (HDPE) and the other wall surface consists of an elastic polyurethane (PU, PUR).

2. Centrifugal pump according to Claim 1, **characterized in that** a component forming the rotating wall surface of the gap (22, 23) consists of high to very high density polyethylene (HDPE) and a component forming the stationary wall surface of the gap (22, 23) consists of elastic polyurethane (PU).

3. Centrifugal pump according to Claim 1 or 2, **characterized in that** a wear ring (6) fastened to an impeller (4) consists of high to very high density polyethylene (HDPE).

4. Centrifugal pump according to one of Claims 1, 2 or 3, **characterized in that** a stepped sleeve (10) rotating with an impeller (4) or a shaft (3) consists of high to very high density polyethylene (HDPE).

5. Centrifugal pump according to one of Claims 1 to 4, **characterized in that** a sealing and/or bearing ring (9, 11) arranged in a torsionally secured manner in the casing consists of elastic polyurethane (PU, PUR) .

6. Centrifugal pump according to one of Claims 1 to 5, **characterized in that** a stepped bush (11) arranged between the impeller (4) and the shaft (3) and arranged in a torsionally secured manner on the casing consists of elastic polyurethane (PU, PUR).

7. Centrifugal pump according to one of Claims 1 to 6, **characterized in that** the sealing ring, bearing ring and/or stepped bush (9, 11) are arranged in a radially displaceable manner in the casing (5, 19).

8. Centrifugal pump according to Claim 7, **characterized in that** the sealing ring, bearing ring and/or stepped bush (9, 11) bear in a sealing manner against the casing (5, 19).

9. Centrifugal pump according to one of Claims 1 to 8, **characterized in that** the sealing ring and/or bearing ring (9) is conically formed.

10. Centrifugal pump according to Claim 9, **characterized in that** the wall thickness of the sealing and/or bearing ring (9) is differently formed between a bearing location on the stationary casing part and a bearing location on the rotating pump part.

11. Centrifugal pump according to Claim 3, **characterized in that** the wear ring (6) has an angular cross section.

12. Centrifugal pump according to one of Claims 1 to 11, **characterized in that** a free space is arranged between a collar (7), projecting on the suction side, of the impeller (4) and a wear ring (6) arranged on the collar (7), the free space lying at least in the plane of the axial sealing gap (22).

## Revendications

1. Pompe centrifuge comprenant un carter (5, 13, 19) dans lequel est disposé au moins un rotor (4), des interstices (22, 23) se trouvant entre un rotor en rotation (4) et des parties de carter fixes, dont les surfaces de paroi adjacentes aux interstices (22, 23) font partie de configurations annulaires (6, 9, 10, 11) servant de joints d'étanchéité et/ou de paliers, et les surfaces de paroi adjacentes à un interstice (22, 23) se composant de matériaux différents, **caractérisée en ce que** pour des interstices (22, 23) à des fins d'étanchéité et/ou de palier entre des parties de pompe rotatives (3, 5) et des parties de carter fixes (5, 9, 11, 19), une surface de paroi se compose d'un polyéthylène de haute à très haute densité (HDPE) et l'autre surface de paroi se compose d'un polyuréthanne élastique (PU, PUR).

2. Pompe centrifuge selon la revendication 1, **caractérisée en ce qu'**un composant formant la surface de paroi rotative de l'interstice (22, 23) se compose de polyéthylène de haute à très haute densité (HDPE) et un composant formant la surface de paroi fixe de l'interstice (22, 23) se compose d'un polyuréthanne élastique (PU).

3. Pompe centrifuge selon la revendication 1 ou 2, **caractérisée en ce qu'**une bague de roulement (6) fixée à un rotor (4) se compose de polyéthylène de haute à très haute densité (HDPE).

4. Pompe centrifuge selon l'une quelconque des revendications 1, 2 ou 3, **caractérisée en ce qu'**un manchon étagé (10) tournant avec un rotor (4) ou avec un arbre (3) se compose de polyéthylène de haute à très haute densité (HDPE).

5. Pompe centrifuge selon l'une quelconque des revendications 1 à 4, **caractérisée en ce qu'**un joint torique et/ou une bague de palier (9, 11) disposés de manière fixe en rotation dans le carter se composent d'un polyuréthanne élastique (PU, PUR).

6. Pompe centrifuge selon l'une quelconque des revendications 1 à 5, **caractérisée en ce qu'**une douille étagée (11) disposée de manière fixe en rotation sur le carter, disposée entre un rotor (4) ou un arbre (3), se compose de polyuréthanne élastique (PU, PUR).

7. Pompe centrifuge selon l'une quelconque des revendications 1 à 6, **caractérisée en ce que** le joint torique, la bague de palier et/ou la douille étagée (9, 11) sont disposés de manière déplaçable radialement dans le carter (5, 19).

8. Pompe centrifuge selon la revendication 7, **caractérisée en ce que** le joint torique, la bague de palier et/ou la douille étagée (9, 11) s'appliquent hermétiquement contre le carter (5, 19).

9. Pompe centrifuge selon l'une quelconque des revendications 1 à 8, **caractérisée en ce que** le joint torique et/ou la bague de palier (9) sont réalisés avec une forme conique.

10. Pompe centrifuge selon la revendication 9 **caractérisée en ce que** l'épaisseur de paroi du joint torique et/ou de la bague de palier (9) est réalisée différemment entre un point d'appui sur la partie fixe du carter et un point d'appui sur la partie rotative de la pompe.

11. Pompe centrifuge selon la revendication 3 **caractérisée en ce que** la bague de roulement (6) présente une section transversale de forme angulaire.

12. Pompe centrifuge selon l'une quelconque des revendications 1 à 11, **caractérisée en ce qu'**un espace libre est prévu entre un rebord saillant (7) du côté aspiration du rotor (4) et une bague de roulement (6) disposée sur le rebord (7), l'espace libre se trouvant au moins dans le plan de l'interstice d'étanchéité axial (22).
